# EUROPÄISCHE PATENTSCHRIFT

(11) **EP 1 076 021 B1**
(45) Veröffentlichungstag und Bekanntmachung des Hinweises auf die Patenterteilung: **31.03.2004**
(21) Anmeldenummer: 00109290.7
(22) Anmeldetag: 29.04.2000
(51) Int. Cl.: B65G 47/84, B65G 47/04, B65G 47/68

(54) **Verfahren und Vorrichtung zum Zusammenführen von Gegenstandsströmen**
Method and device for combining streams of articles
Procédé et dispositif pour réunir des courants d'articles

(30) Priorität: 11.08.1999 CH 147699
(43) Veröffentlichungstag der Anmeldung: 14.02.2001
(73) Patentinhaber: ELPATRONIC AG, 8962 Bergdietikon (CH)
(72) Erfinder: Spiga, Mauro, 40050 Minerbio (BO) (IT)

(56) Entgegenhaltungen:
- GB-A- 1 448 858
- NL-C- 93 383

## Beschreibung

Die Erfindung betrifft ein Verfahren gemäss Oberbegriff des Anspruchs 1 sowie eine Vorrichtung gemäss Oberbegriff des Anspruchs 3.

Bei verschiedenen Anwendungen, bei welchen Gegenstände in zwei getrennten Abfolgen bzw. Strömen anfallen, kann es notwendig sein, diese Gegenstandsströme zu einer einzigen Abfolge von Gegenständen zu vereinigen. Insbesondere bei Dosenzargen, die mit hoher Geschwindigkeit geschweisst werden, ist es üblich, die Trocknung der nachfolgend aufgebrachten Beschichtung in mehreren Trocknungslinien durchzuführen, da die Trocknung langsamer erfolgt als die Schweissung. Für die nachfolgenden Arbeitsgänge des Sickens und Bördelns erfolgt wieder ein Zusammenführen der Zargenströme aus den Trocknungslinien. Aus GB 1 448 858 ist ein Verfahren bzw. eine Vorrichtung gemäss Oberbegriff bekannt. Beide Schneckenförderer speisen das Sternrad und müssen bei gewünschter Parallellage eng nebeneinander liegend plaziert werden.

Der Erfindung liegt die Aufgabe zugrunde, ein Verfahren bzw. eine Vorrichtung zur Zusammenführung zu schaffen, welche auf einfache Weise und mit grosser Geschwindigkeit funktionieren und mittels welchen die Gegenstände schonend behandelt werden und insbesondere Dosenzargen nicht deformiert werden.

Diese Aufgabe wird bei einem Verfahren der eingangs genannten Art mit den kennzeichnenden Merkmalen des Anspruchs 1 gelöst bzw. bei einer Vorrichtung der eingangs genannten Art mit den kennzeichnenden Merkmalen des Anspruchs 3.

Dadurch, dass die Ströme mittels eines gemeinsamen Sternrades zusammengeführt werden, ergibt sich eine einfache Lösung der Aufgabe. Zunächst erfolgt eine Vereinzelung und Beabstandung der Gegenstände jedes Stromes mittels jeweils einer Förderschnecke mit entlang ihrer Länge zunehmendem Abstand der Schneckengänge. Die Gegenstände jedes Stromes werden in aufeinanderfolgende Aufnahmepositionen des Sternrades eingebracht, wobei die Gegenstände des einen Stromes über ein weiteres Sternrad von der einen Schnecke zum gemeinsamen Sternrad gefördert werden. Dies ermöglicht eine kompakte und gleichgerichtete Anordnung der Schneckenförderer.

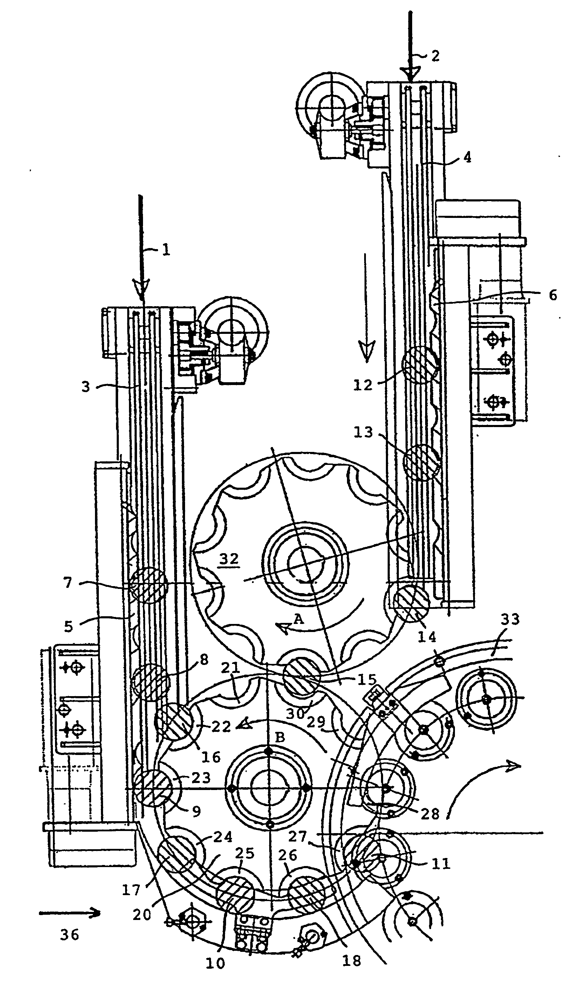

Im folgenden werden Ausführungsbeispiele der Erfindung anhand der einzigen Figur erläutert, welche eine Vorrichtung gemäss der Erfindung in Draufsicht zeigt.

In der Figur sind die beiden Ströme von Gegenständen, welche in die gezeigte Vorrichtung eingebracht werden,.als Pfeile 1 bzw. 2 dargestellt. Die Gegenstände gelangen jeweils von entsprechenden Fördermitteln, die hier nicht dargestellt sind, zum Eingang der Vorrichtung und gelangen dort auf bekannte Weise einzeln auf ein Fördermittel 3 bzw. 4, welches z.B. aus umlaufend angetriebenen Förderbändern besteht. Das Fördermittel 3 fördert die einzelnen Gegenstände zu einer Förderschnecke 5, welche, wie in der Figur ersichtlich, einen zunehmenden Abstand der Schneckengänge aufweist. Die drehend angetriebene Förderschnecke 5 vereinzelt und separiert die Gegenstände in durch die Schneckengänge genau bestimmter Lage zueinander. Am Ende der Förderschnecke werden die Gegenstände in Aufnahmepositionen eines Sternrades 20 aufgenommen, welches in Richtung des Pfeils B dreht. Im gezeigten Beispiel sind die Gegenstände 7 und 8, welche z.B. stehend geförderte Dosenzargen sind, noch innerhalb der Förderschnecke 5. Der Gegenstand 8 wird dabei als nächstes in die Aufnahmeposition 21 des Sternrades 20 abgegeben. Zu diesem Zwecke sind die Antriebe der Förderschnecke 5 und des Sternrades 20 derart synchronisiert, dass sich eine Übergabe am Ende des Schneckenförderweges in die jeweilige Aufnahmetasche des Sternrades ergibt. Die Dosenzarge 9 befindet sich in derjenigen Lage am Ende des Schneckenförderers, wo diese Übergabe in die Tasche 23 erfolgt ist.

Die Gegenstände vom Hauptförderer 2 sind auf dieselbe Weise in den Schneckenförderer 6 eingebracht worden, wobei in der Figur die entsprechenden Gegenstände 12 und 13 dargestellt sind. Vom Schneckenförderer 6 werden die Gegenstände über ein weiteres Sternrad 32, welches sich gemäss Pfeil A dreht, an das Sternrad 20 übergeben. In der Figur ist dazu der Gegenstand 14 dargestellt, welcher bereits den Schneckenförderer 6 verlassen hat und in einer Aufnahmeposition am Sternrad 32 gehalten ist. Ein weiterer Gegenstand 15 des zweiten Gegenstandsstroms wird in der Figur gerade vom Sternrad 32 in die Aufnahmeposition 30 des Sternrades 20 abgegeben. Bei dieser Abgabe wird, wie dargestellt, immer eine der Aufnahmepositionen des Sternrades 20 freigelassen, so dass den vom Schneckenrad 6 her kommenden Strom von Gegenständen nur jede zweite Aufnahmeposition des Sternrades 20 besetzt wird. Entsprechend gelangt der Gegenstand 14 nachfolgend in die Aufnahmeposition 28 des Sternrades 20 und ist der vorhergehende Gegenstand 16 in die Aufnahmeposition 22 des Sternrades 20 abgegeben worden, unter Freilassung der Aufnahmeposition 21. In diese gelangt, wie bereits erläutert, der Gegenstand 8 des ersten Gegenstandsstroms aus dem Schneckenförderer 5. Die Aufnahmepositionen des Sternrades 20 werden also nacheinander mit den Gegenständen des jeweiligen Gegenstandsstromes gefüllt. So sind die Aufnahmepositionen 23, 25 und 27 mit den entsprechenden Gegenständen 9, 10 und 11 des ersten Gegenstandsstromes belegt und die Aufnahmepositionen 22, 24 und 26 des Sternrades 20 mit den Gegenständen 16, 17. und 18 des zweiten Gegenstandsstromes. Die Aufnahmepositionen des Sternrades 20 werden somit aufeinanderfolgend und lückenlos mit den Gegenständen aus den beiden Gegenstandsströmen 1 bzw. 2 gefüllt. Das Sternrad entlässt die Gegenstände entsprechend als eine Abfolge von Gegenständen, wobei dies, wie in der Figur als Beispiel gezeigt, dadurch erfolgen kann, dass die Gegenstände an ein weiteres Sternrad 33 abgegeben werden, welches zum Beispiel bereits ein Teil der nachfolgenden Bearbeitungsstation, z.B. einer Station zum Einbringen von Sicken und Bördelungen in die Dosenzargen, sein kann. In der Figur ist ersichtlich, wie der Gegenstand 11 aus der Aufnahmeposition 27 an das Sternrad 33 abgegeben wird. Entsprechend sind nachfolgend die Aufnahmepositionen des Sternrades 20 wieder leer und zur Beschickung mit neuen Gegenständen bereit, wie dies z.B. bei der Aufnahmeposition 29 ersichtlich ist, welche zur Beschickung mit dem.Gegenstand 7 des ersten Förderstromes vorgesehen ist.

Die dargestellte Anordnung mit einem weiteren Sternrad 32 erlaubt die platzsparende und für die Aufnahme der Gegenstandsströme geeignete parallele Anordnung der Förderschnecken 5 und 6. Es wäre aber auch möglich, eine Förderschnecke z.B. in einem Winkel zur Förderschnecke 5 anzuordnen, z.B. im rechten Winkel wie mit dem Pfeil 36 angedeutet, so dass auch an dieser Position des Sternrades 20 Gegenstände direkt zu diesem übergeben werden können. Das Verfahren und die Vorrichtung sind demgemäss nicht auf zwei Gegenstandsströme beschränkt, sondern es können auch mehr als zwei Gegenstandsströme auf das Sternrad 20 geführt werden.

Die Synchronisation der Antriebe der Förderschnecken und der Sternräder kann auf an sich bekannte Weise durch analoge oder digitale Steuerungen erfolgen und wird hier nicht näher erläutert. Die Übergabe in die Sternradaufnahmepositionen und das Halten der Gegenstände in diesen Positionen erfolgt ebenfalls auf bekannte Weise durch mechanische, pneumatische oder magnetische Mittel oder eine Kombination derselben und wird hier nicht weiter dargestellt.

## Patentansprüche

1. Verfahren zum Zusammenführen mindestens zweier Ströme (1, 2) von Gegenständen (7-11; 12-18), insbesondere Dosenzargen, wobei die Ströme auf ein diesen gemeinsames, drehendes Sternrad (20) geführt werden, dessen Aufnahmepositionen (21-30) mit Gegenständen beider Ströme befüllt werden und welches die Gegenstände an einer Abgabestelle als Abfolge von Gegenständen entlässt, wobei die Gegenstände des ersten Stromes (7-11) vereinzelt und voneinander beabstandet werden, so dass sie einzeln und nacheinander in nicht aufeinanderfolgende erste Aufnahmepositionen des Sternrades abgegeben werden, und wobei die Gegenstände des zweiten Stromes (12-18) ebenfalls vereinzelt und beabstandet und in zwischen den ersten Aufnahmepositionen liegende zweite Aufnahmepositionen des Sternrades abgegeben werden, und ferner zur Beabstandung und Einbringung der Gegenstände Schneckenförderer (5, 6) mit in Förderrichtung zunehmendem Abstand der Schneckengänge verwendet werden, **dadurch gekennzeichnet, dass** einer der Schneckenförderer (6) die Gegenstände (12-18) über ein weiteres Sternrad (32) an das Sternrad (20) abgibt.

2. Verfahren nach Anspruch 1, **dadurch gekennzeichnet, dass** die Längsachsen der Schneckenförderer (5, 6) parallel zueinander liegen.

3. Vorrichtung zum Zusammenführen mindestens zweier Ströme (1, 2) von Gegenständen (7-11; 12-18), wobei ein den Strömen gemeinsames Sternrad (20) vorgesehen ist, dessen Aufnahmepositionen (21-30) durch beide Ströme beschickbar sind, und welches eine Abgabestelle für die Gegenstände aufweist, wobei jeweils eine Anordnung (3, 5; 4, 6) zur Vereinzelung und Beabstandung der Gegenstände jedes Stromes (1, 2) vorgesehen ist, welche Anordnungen zur Beschickung nicht aufeinanderfolgender Aufnahmepositionen des Sternrades (20) ausgestaltet sind.und jeweils einen Schneckenförderer (5, 6) mit in Förderrichtung zunehmend beabstandetem Schneckengang aufweisen, **dadurch gekennzeichnet, dass** der eine Schneckenförderer (6) die Gegenstände über ein weiteres Sternrad (32) an das gemeinsame Sternrad (20) abgibt.

4. Vorrichtung nach Anspruch 3, **dadurch gekennzeichnet, dass** die Längsachsen der Schneckenförderer parallel zueinander liegen.

## Claims

1. Method for combining at least two streams (1, 2) of articles (7-11; 12-18), more particularly can bodies, the streams being guided onto a rotating star wheel (20) common thereto and the receiving positions (21-30) of which are filled with articles from both streams, and which lays off the articles at a delivery station as a succession of articles, the articles from the first stream (7-11) being separated and spaced apart from one another, with the result that they are delivered individually one after the other into non-consecutive first receiving positions of the star wheel, and the articles from the second stream (12-18) likewise being delivered individually and at intervals into second receiving positions of the star wheel which are situated between the first receiving positions, and screw conveyors (5, 6) which exhibit increasing spacing of the screw flights in the direction of travel also being used to space out and introduce the articles, **characterised in that** one of the screw conveyors (6) delivers the articles (12-18) to the star wheel (20) via a further star wheel (32).

2. Method according to claim 1, **characterised in that** the longitudinal axes of the screw conveyors (5, 6) are situated parallel to one another.

3. Device for combining at least two streams (1, 2) of articles (7-11; 12-18), there being provided a star wheel (20) common to the streams and the receiving positions (21-30) of which can be charged by both streams, and which features a delivery station for the articles, in each case an arrangement (3, 5; 4, 6) being provided for separating and spacing out the articles of each stream (1, 2), which arrangements are designed for charging non-consecutive receiving positions of the star wheel (20) and each incorporating a screw conveyor (5, 6) with a flight of screws spaced at increasing distances apart in the direction of travel,
**characterised in that** one screw conveyor (6) delivers the articles to the common star wheel (20) via a further star wheel (32).

4. Device according to claim 3, **characterised in that** the longitudinal axes of the screw conveyors are situated parallel to one another.

## Revendications

1. Procédé pour réunir au moins deux flux (1, 2) d'objets (7-11 ; 12-18), en particulier des corps de boîtes, les flux étant guidés sur une roue étoile (20) commune à ces flux et rotative, dont les positions de logement (21-30) sont remplies d'objets des deux flux et que les objets quittent en un endroit de distribution sous la forme de succession d'objets, les objets du premier flux (7-11) étant séparés et écartés les uns des autres de sorte qu'ils sont distribués individuellement et successivement dans des premières positions de logement non successives de la zone étoile, et les objets du second flux (12-18) étant séparés et écartés également et distribués dans des secondes positions de logement, disposées entre les premières positions de logement de la roue étoile, et des convoyeurs à vis (5, 6) avec un espacement des pas de vis croissant dans le sens de transport étant utilisés également pour l'écartement et l'introduction des objets, **caractérisé en ce que** l'un des transporteurs à vis (6) remet les objets (12-18) au moyen d'une autre roue étoile (32) à la roue étoile (20).

2. Procédé selon la revendication 1, **caractérisé en ce que** les axes longitudinaux des transporteurs à vis (5, 6) sont disposés parallèles entre eux.

3. Dispositif pour réunir au moins deux flux (1, 2) d'objets (7-11 ; 12-18), une roue étoile (20) commune aux flux étant prévue, dont les positions de logement (21-30) peuvent être alimentées par les deux flux, et qui présente un endroit de distribution pour les objets, un dispositif (3, 5 ; 4, 6) étant prévu à chaque fois pour la séparation et l'espacement des objets de chaque flux (1, 2), lesquels dispositifs sont conçus pour l'alimentation de positions de logements non successifs de la roue étoile (20) et présentent respectivement un convoyeur à vis (5, 6) avec un pas de vis espacé de façon croissante dans le sens de transport, **caractérisé en ce que** l'un des convoyeurs à vis (6) remet les objets au moyen d'une autre roue étoile (32) à la roue étoile (20) commune.

4. Dispositif selon la revendication 3, **caractérisé en ce que** les axes longitudinaux des convoyeurs à vis sont parallèles entre eux.
